# EUROPÄISCHE PATENTSCHRIFT

(11) **EP 3 910 203 B1**
(45) Veröffentlichungstag und Bekanntmachung des Hinweises auf die Patenterteilung: **24.08.2022**
(21) Anmeldenummer: 20173864.8
(22) Anmeldetag: 11.05.2020
(51) Int. Cl.: F16B 5/12, E06B 9/17, E06B 9/42, F16B 13/00, F16B 15/00, F16B 25/00

(54) **BEFESTIGUNGSANKER UND WICKELWELLENEINHAUSUNG**
FASTENING ANCHOR AND WINDING SHAFT HOUSING
ANCRAGE DE FIXATION ET BOÎTIER D'ARBRE D'ENROULEMENT

(43) Veröffentlichungstag der Anmeldung: 17.11.2021
(73) Patentinhaber: ROMA KG, 89331 Burgau (DE)
(72) Erfinder: Domes, Dominik, 89331 Burgau (DE); Weber, Fabian, 89331 Burgau (DE)
(74) Vertreter: Patentanwälte Munk

(56) Entgegenhaltungen:
- EP-A1- 0 933 536
- DE-T2- 69 917 588
- DE-U1- 9 301 098
- DE-U1-202008 003 147
- FR-A1- 3 029 236

## Beschreibung

Die Erfindung betrifft einen Befestigungsanker für ein Dämmstoffelement, insbesondere einen Rollladenkasten gemäß dem Oberbegriff des Anspruchs 1, sowie einen mit zumindest einem solchen Befestigungsanker ausgestattete Wickelwelleneinhausung einer Gebäudeöffnungsverschattungsvorrichtung gemäß dem Oberbegriff des Anspruchs 14.

Heutige Wärmedämmverbundfassaden bestehen in der Regel aus dem Mauerwerk vorgesetzten Bausteinen aus geschäumten Kunststoff oder gepresster Glasoder Steinwolle. Bei ökologisch besonders hochwertiger, aber auch teurer Bauweise, kommen auch Naturwerkstoffe wie gepresste Hanf- oder Holzfasern zum Einsatz. Allen diesen Werkstoffen ist gemein, dass sie keine besonders hohe Tragefähigkeit für an der Fassade zu befestigende Elementen wie Markisen oder Fallrohren aufweisen.

Bekannt hierfür sind Befestigungsanker, die im Idealfall mit thermischer Trennung die Wärmedämmschicht durchgreifen und in der dahinter liegenden Steinfassade verankert werden, so dass der Fassade vorgelagerte Bauelemente über die Befestigungsanker an der Steinfassade abgestützt werden. Für weniger schwere Bauelemente, z. B. Briefkästen, Lampen oder dergleichen sind dagegen spezielle Befestigungsdübel im Einsatz, die einen Verankerungspunkt für eine Verschraubung in der Isolierschicht selbst bereitstellen. Ein Beispiel hierfür findet sich in der deutschen Patentanmeldung DE 10 2011 116 877 A1.

Derartige Befestigungsdübel weisen in der Regel einen sich von ihrer ins Material hinein zu versenkenden Spitze ausgehenden Gewindeabschnitt auf mit einem selbstschneidenden Gewinde mit besonders tiefem Gewindegang und einem Dübelkopf, der nach dem Eindrehen des Dübels in das vorgebohrte Dämmstoffelement am Dämmstoffelement zum Anschlag kommt. Durch den sich im Dämmstoffelement einschneidenden Gewindegang wird somit eine gewisse Tragfähigkeit für die in den Dübel einzuschraubende Befestigungsschraube erlangt.

Ein weiteres Beispiel eines derartigen Befestigungsdübels zeigt die deutsche Patentanmeldung DE 103 61 751 A1, wobei hier noch verschiedenste Verbesserungen für die Tragfähigkeit des Dübels vorgesehen sind, unter anderem Rippen, mit denen Schlitze in den Dämmstoff gestochen werden können, die mit Klebstoff gefüllt die vom Dübel aus in den Dämmstoff gestoßenen Rippen aufnehmen, so dass sich eine verbesserte Tragfähigkeit des Dübels ergibt.

Neben der Befestigung von Bauelementen an Wärmedämmverbundfassaden stellt sich jedoch auch das Problem, Bauelemente der Wärmedämmverbundfassade selbst an der gemauerten oder betonierten Rohbaufassade zu befestigen. Die quaderförmigen Bausteine der Wärmedämmverbundfassade werden dabei in der Regel mittels an den Ecken der Bausteine eingeschraubter Schrauben an der Rohbaufassade befestigt, wobei außenseitig eine große Beilagscheibe unter den Schraubenkopf geschoben ist, die vier aneinandergrenzende Wärmedämmverbundbausteinquader eckseitig an die Fassade andrückt.

Im Gesamtverbundsystem gibt es jedoch auch kompliziertere Wärmedämmverbundbauelemente, wie beispielsweise aus geschäumten Kunststoff bestehende Rollladenkästen, die am Fenstersturz bzw. oberseitig in der Fensterlaibung befestigt werden müssen.

Die deutsche Gebrauchsmusterschrift DE 20 2017 104 158 U1 offenbart eine Halteeinrichtung zur Anbindung eines aus Schaumkunststoffmaterial bestehenden Rollladenkastens an der darüber befindlichen Gebäudestruktur mit einem im wesentlichen L-förmigen Träger, dessen vertikaler Schenkel in einer Innenwand des Rollladenkastens verankert ist und dessen horizontaler Schenkel oberhalb des Rollladenkastens Befestigungslaschen aufweist, an denen Befestigungsbolzen zur Befestigung des Rollladenkasten an der Rohbaufassade eingeschraubt werden können.

Neben der relativ aufwendigen Konstruktion und Montage des Rollladenkastens, aber auch des L-förmigen Trägers selbst stellt sich dabei auch das Problem, dass im Bereich zwischen der oberen Deckwand des Rollladenkastens und der dieser Deckwand zugewandten Wand der Fensterlaibung ein durch die Breite des horizontalen Arms der L-förmigen Trägerkonsole vorgegebener Spalt verbleibt. Ein Schraubdübel für die Befestigung von Eternitschindeln auf Vollwärmeschutz-Fassaden ist bekannt aus der DE 93 01 098 U1.

Hiervon ausgehend ist es Aufgabe der vorliegenden Erfindung, einen Befestigungsanker für ein Dämmstoffelement aus geschäumten Kunststoff oder dergleichen, wie beispielsweise eine Wickelwelleneinhausung zu schaffen, sowie eine mit zumindest einem solchen Befestigungselement ausgerüstete Wickelwelleneinhausung, mit denen vorstehend genannten Probleme überwunden werden können.

Diese Aufgabe wird hinsichtlich des Befestigungsankers mit den Merkmalen des Anspruchs 1 gelöst, hinsichtlich der Wickelwelleneinhausung mit den Merkmalen des Anspruchs 14.

Erfindungsgemäß wird ein Befestigungsanker für ein Dämmstoffelement, insbesondere ein Dämmstoffelement aus geschäumten Kunststoff wie z. B. EPS vorgeschlagen. Derartige Dämmstoffelemente finden sich beispielsweise als Bauteile einer Wickelwelleneinhausung einer Gebäudeöffnungsverschattungsvorrichtung wie beispielsweise einem Rollladen oder einer Senkrechtjalousie oder bilden die Wickelwelleneinhausung.

Der erfindungsmäßige Befestigungsanker weist dabei in an sich bekannter Art ein Ankerelement auf, das einen sich an seiner Spitze zu seinem Kopf erstreckenden Schaft aufweist, wobei der Schaft einen zumindest einmal, bevorzugt zwei- bis dreimal vollständig umlaufenden Gewindegang mit zur Verankerung in dem Dämmstoffelement ausreichender Gangtiefe trägt, insbesondere in Form eines selbst schneidenden Gewindes, wobei sich eine Innenausnehmung in Axialrichtung des Schafts von einer kopfseitigen Stirnseite aus in das Ankerelement hinein erstreckt.

Der erfindungsgemäße Befestigungsanker zeichnet sich dadurch aus, dass das Ankerelement eine Bolzenaufnahme für einen Befestigungsbolzen aufweist, die sich durch eine die Innenausnehmung umfangsseitig umgebende Wandung hindurch erstreckt.

Vorteilhaft kann das Ankerelement somit nach Art eines für Isoliermaterial geeigneten Befestigungsdübels in dem Dämmstoffelement verankert werden, indem es ins volle Material oder nach Vorbohren in das Material des Dämmstoffelements eingeschraubt wird und so eine Verankerung für einen durch die Bolzenaufnahme hindurchsteckbaren Befestigungsbolzen bildet, der vorteilhaft ebenfalls Teil des Befestigungsankers ist. Mittels des in die Bolzenaufnahme passenden Befestigungsbolzens kann dann das Dämmstoffelement, an dem das Ankerelement verankert ist an einem anderen Gegenstand, also beispielsweise einer Gebäudewand befestigt werden.

Das Ankerelement eignet sich also zum Einen als per Befestigungsbolzen an z. B. der Gebäudewand abgestützter Befestigungsdübel, zum Anderen und vordringlich aber auch dazu, ein Dämmstoffelement gebäudeseitig zu befestigen. In dieser Anwendung kann das Ankerelement beispielsweise zur Befestigung einer Wickelwelleneinhausung einer Gebäudeöffnungsverschattungsvorrichtung in der Mauerlaibung der Gebäudeöffnung dienen. Es wäre jedoch auch denkbar, das Ankerelement als klassischen Befestigungsdübel, also ohne Befestigungsbolzen einzusetzen, falls dies im Einzelfall gewünscht ist.

Weist das Ankerelement dabei einen mehrfach gestuften Kopf auf, so sorgt dieser für ein Einziehen des Ankerelements beim Einschrauben in den Dämmstoff, also insbesondere in den geschäumten Kunststoff des Dämmstoffelements. Damit der Gewindegang einen zur Verankerung in dem Dämmstoffelement ausreichenden Hinterschnitt erzeugt, so dass trotz der geringen Festigkeit des Dämmmaterials eine sichere Verankerung gegeben ist, weist der Gewindegang vorteilhaft mindestens 5 mm, bevorzugt mindestens 10 mm Tiefe auf und vorteilhaft mindestens 5 mm, bevorzugt mindestens 10 mm Breite. Das Ankerelement ist dabei bevorzugt aus Kunststoff, beispielsweise HDPE, könnte aber auch aus Zinkdruckguss gefertigt werden.

Die Innenausnehmung, die sich vom Kopf aus in das Ankerelement bevorzugt zentrisch entlang der Schaftachse hinein erstreckt kann dabei im Bereich des Kopfs einen sich ausgehend von der kopfseitigen Stirnseite in das Ankerelement hinein erstreckenden Arbeitsabschnitt aufweisen, von dem aus die Bolzenaufnahme die die Innenausnehmung umfangsseitig umgebende Wandung durchdringt. Im Arbeitsabschnitt kann die Innenausnehmung dabei eine Radialabmessung aufweisen, die gegenüber dem Schaft relativ groß ist, bevorzugt gleich oder bevorzugt größer als der Schaft, so dass ein seitliches Einstecken des Befestigungsbolzens in die Bolzenaufnahme auch dann gelingt, wenn die Bolzenaufnahme fast im 90°-Winkel zur Schaftachse verläuft.

Schaftseitig kann sich dann an den Arbeitsabschnitt ein Werkzeugeingriffsabschnitt mit einer zu einem Eindrehwerkzeug für das Ankerelement passenden Kontur anschließen, beispielsweise mit einer Kreuzschlitzkontur, der eine gegenüber dem Arbeitsabschnitt kleinere Radialabmessung aufweist, um die Festigkeit des Ankerelements im Bereich des Schafts nicht unnötig zu schwächen. Alternativ dazu wäre es denkbar, den Befestigungsbolzen über eine Sollbruchstelle, die ein Einschlagen des Befestigungsbolzen erlaubt, einstückig mit dem Ankerelement auszuformen, so dass der Befestigungsbolzen zum Einen als Eindrehwerkzeug für das Ankerelement dienen kann und der Werkzeugeingriffsabschnitt nicht mehr unbedingt nötig ist und zum Anderen eine weitere Montageerleichterung erzielt wird. Bei einem zweistückigen Befestigungsanker können allerdings unterschiedlich lange Befestigungsbolzen je nach den bauseitigen Gegebenheiten mit dem gleichen Ankerelement eingesetzt werden.

Die Bolzenaufnahme kann sich dabei von der Innenausnehmung aus mit einem Winkel gegenüber der Schaftachse zur Spitze des Ankerelements hin erstrecken, der kleiner als 90° Grad ist und insbesondere zwischen 45° Grad und 85° Grad liegt, beispielsweise bei 75° Grad, so dass das in eine Seitenwand eines Dämmstoffelements eingeschraubte Ankerelement eine Durchdringung des Dämmstoffelements mittels des nahezu im 90°-Winkel abstehenden Befestigungsbolzens und eine Befestigung an einem in Richtung des Befestigungsbolzens nahegelegenen Gegenstand erlaubt, gleichzeitig aber auch ein Einschieben des Befestigungsbolzens in die Bolzenaufnahme möglich ist.

Um dies weiter zu erleichtern kann auf der Bolzenaufnahme gegenüber liegenden Seite des Arbeitsabschnitts im Bereich der kopfseitigen Stirnseite des Ankerelements ein Einschubkanal für den Befestigungsbolzen aus der den Arbeitsabschnitt umgebenden Wandung ausgenommen sein, so dass der Winkel, unter dem der Befestigungsbolzen von der Schaftachse absteht, entsprechend steiler sein kann.

Um sicherzustellen, dass die Wandung des Ankerelements um die Bolzenaufnahme herum auch im rauen Einsatz z. B. auf Baustellen nicht einreißt und der Befestigungsbolzen sicher am Ankerelement verankert ist, kann die die Innenausnehmung umfangsseitig umgebende Wandung im Bereich der Bolzenaufnahme verstärkt sein. Dazu kann vorteilhaft ein sich nach innen hin in die Innenausnehmung hinein erstreckender Einsteckkanal für den Befestigungsbolzen vorgesehen sein.

Weiterhin vorteilhaft ist es dabei, wenn an der kopfseitigen Stirnfläche des Ankerelements eine Markierung vorgesehen ist, die in Richtung der Bolzenaufnahme zeigt. Denn auf diese Weise erkennt der Monteur beim Einschrauben des Ankerelements in das Dämmstoffelement auf einfache Weise, wie weit er das Ankerelement eindrehen muss, so dass der Befestigungsbolzen in die gewünschte Richtung eingeschlagen oder eingedreht werden kann.

Vorteilhaft kann die Bolzenaufnahme von einer glatten Umfangsfläche eingefasst sein und der Befestigungsbolzen als Einschlagsbolzen mit Passung zur Bolzenaufnahme ausgebildet sein.

Es wäre aber ebenso denkbar, dass die Bolzenaufnahme von einem mit einem Innengewinde versehenen Umfangsfläche eingefasst wird und der Befestigungsbolzen als Schraubbolzen mit einem zum Innengewinde der Bolzenaufnahme passenden Außengewinde ausgebildet ist. Weiterhin kann der Befestigungssbolzen auch zum Einschlagen an dem Gegenstand, an dem das Dämmstoffelement befestigt werden soll, ausgebildet sein, nach Art eines Nagels, oder aber zum Einschrauben mit einem Außengewinde im spitzennahen Bereich.

Insgesamt eignet sich der Befestigungsanker damit besonders zur Befestigung von aus Dämmstoff bestehenden Wickelwelleneinhausungen an der Fensterlaibung oberhalb der Wickelwelleneinhausung. Dementsprechend wird gemäß eines zweiten Aspekt der Erfindung eine Wickelwelleneinhausung einer Gebäudeöffnungsverschattungsvorrichtung, insbesondere ein Rollladenkasten vorgeschlagen, mit einer bei eingebauter Wickelwelle die Wickelwelle zumindest oberseitig und auf der dem Gebäudeinneren zugewandten Innenseite, vorzugsweise auch auf der dem Gebäudeinneren abgewandten Außenseite umgebenden Dämmstoffelement, wobei das Dämmstoffelement und damit die Wickelwelleneinhausung zumindest mit einem, bevorzugt mit einer Mehrzahl von Befestigungsankern der vorstehend beschriebenen Art an einer oberseitig an die Wickelwelleneinhausung angrenzenden Gebäudewandung befestigt ist. Dabei kann das Ankerelement jeweils in eine vertikale Seitenwand des Dämmstoffelements eingeschraubt sein und der Befestigungsbolzen das Dämmstoffelement jeweils vom Ankerelement aus nach oben hin durchdringen und in die oberseitig an die Wickelwelleneinhausung angrenzende Gebäudewandung eingeschlagen oder eingeschraubt sein.

Der Befestigungsanker eignet sich dabei insbesondere auch als Montagehilfsmittel, mit dem das Dämmstoffelement der Wickelwelleneinhausung bei der Montage zunächst an der Gebäudelaibung angeheftet wird, bevor die eigentliche Befestigungsvorrichtung angebracht wird.

Weitere Merkmale und Vorteile der Erfindung werden an Hand der in den beiliegenden Zeichnungen dargestellt Ausführungsformen näher erläutert. Es zeigen:
- Figur 1: ein Ankerelement eines Befestigungsankers gemäß einer Aus führungsform der Erfindung in Seitenansicht;
- Figur 2: das in Figur 1 gezeigte Ankerelement von der gegenüberliegenden Seite aus;
- Figur 3: eine perspektivische Ansicht des in den Figuren 1 und 2 gezeigten Ankerelements von schräg oben;
- Figur 4: das in den Figuren 1 bis 3 gezeigte Ankerelement in einer weiteren perspektivischen Ansicht von schräg oben und um 180° Grad gegen über der in Figur 3 gezeigten Ansicht gedreht;
- Figur 5: einen Befestigungsanker mit dem in den vorhergehenden Figuren gezeigten Ankerelement im in ein Dämmstoffelement eingeschraub ten Zustand mit einem durch das Dämmstoffelement geschlagenen Befestigungsbolzen; und
- Figur 6: eine Wickelwelleneinhausung mit dem in den vorhergehenden Figuren gezeigten Befestigungsanker.

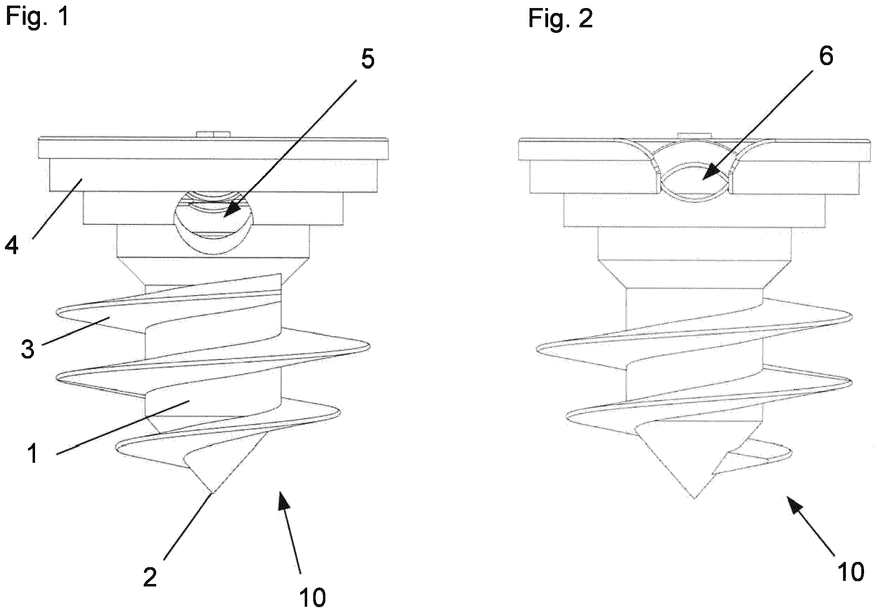

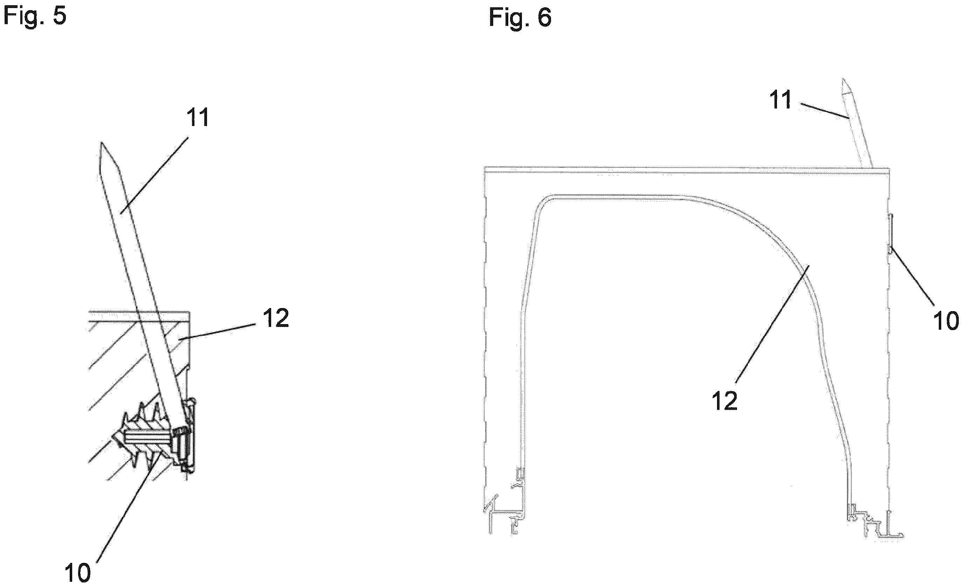

Die Fig. 1 bis 4 zeigen ein Ankerelement 10 eines insgesamt mit 10,11 bezeichneten Befestigungsankers, welches neben dem Ankerelement 10 noch einen in den Fig. 5 und 6 gezeigten Befestigungsbolzen 11 aufweist.

Das Ankerelement 10 weist dabei eine Spitze 2 auf und einen gestuften Kopf 4, die über einen Schaft 1 miteinander verbunden sind, an dem ein stark ausgebildeter Gewindegang 3 vorgesehen ist, geeignet, um sich beim Einschrauben in ein Dämmstoffelement in den Dämmstoff einzuschneiden und dort das Ankerelement 10 zu verankern, wobei der gestufte Kopf 4 in den Dämmstoff hinein eingezogen wird, so dass kein Vorbohren nötig ist.

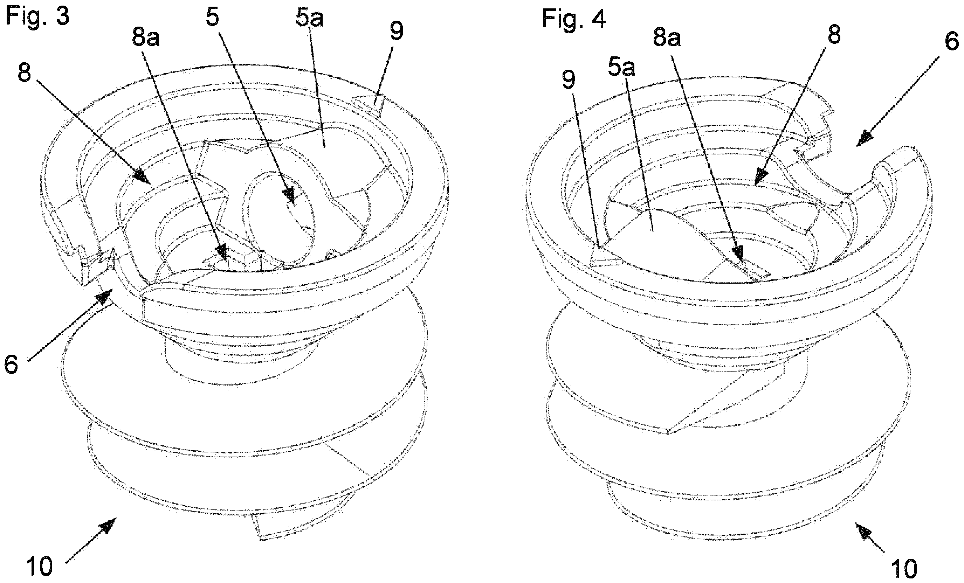

Wie den Fig. 3 und 4 zu entnehmen ist weist das Ankerelement 10 eine sich von seiner kopfseitigen Stirnseite aus in Richtung zur Spitze 2 hin in das Ankerelement 10 hinein erstreckende Innenausnehmung 8,8a auf, die im Bereich des Kopfs 4 einen Arbeitsabschnitt 8 mit relativ großem Durchmesser aufweist, der sich zum Schaft hin den Stufen des Kopfs 4 folgend verjüngt. Schaftseitig schließt sich an den Arbeitsabschnitt 8 ein Werkzeugeingriffsabschnitt 8a an, der eine Kreuzschlitzkontur aufweist und eine gegenüber dem Arbeitsabschnitt 8 relativ kleine Radialabmessung. An dem Werkzeugeingriffsabschnitt 8a kann somit ein Werkzeug zum Eingriff gebracht werden, mit dem sich das Ankerelement 10 in den Dämmstoff hineinschrauben lässt, ohne dass das Ankerelement 10 im Bereich seines Schafts unnötig geschwächt wird.

Im Arbeitsabschnitt 8 der Innenausnehmung 8,8a ist dabei eine Bolzenaufnahme 5 durch die die Innenausnehmung 8,8a umfangsseitig umgebende Wandung hindurch geführt. Durch die Bolzenaufnahme 5 kann dann nach dem Verankern des Ankerelements 10 im Dämmstoff der Befestigungsbolzen 11 getrieben werden. Die Bolzenaufnahme 5 verläuft dabei mit einem Winkel von 75° Grad zur Achse des Schafts 1, zwar nahezu im 90°-Winkel zur Schaftachse, aber immer noch so, dass der Befestigungsbolzen 11 aufgrund des relativ großvolumigen Arbeitsabschnitts 8 und der Neigung der Einschubrichtung von der der Bolzenaufnahme 5 gegenüberliegenden Seite der kopfseitigen Stirnseite des Ankerelements 10 in die Bolzenaufnahme 5 eingeschoben werden kann. Um dies noch weiter zu erleichtern ist dort ein Einschubkanal 6 aus der den Arbeitsabschnitt 8 umgebenden Wandung ausgenommen.

Damit der Monteur beim Einschrauben des Ankerelements 10 in den Dämmstoff leichter erkennt, in welche Richtung die Bolzenaufnahme 5 und damit der Befestigungsbolzen 11 zeigt, ist dabei ferner eine Markierung 9 an der kopfseitigen Stirnfläche vorgesehen, die die Richtung der Bolzenaufnahme 5 angibt.

Weiterhin ist die den Arbeitsabschnitt 8 im Bereich der Bolzenaufnahme 5 umgebende Wandung durch einen Einsteckkanal 5a verdickt, der die Bolzenaufnahme 5 verlängert und so zu einer stabilen Führung des Befestigungsbolzens 11 in der Bolzenaufnahme 5 führt.

Die Fig. 5 und 6 zeigen schematisiert die Einbausituation des Befestigungsankers 10,11 an einem Dämmstoffelement 12, im gezeigten Beispiel einem in etwa U-förmigen Dämmstoffelement 12 einer Wickelwelleneinhausung, das sich längs der Wickelwelle erstreckt und diese oberseitig, sowie auf der Gebäudeaußenseite und der Gebäudeinnenseite umgibt. Das Ankerelement 10 ist von einer vertikalen Außenwand des Einhausungsbauteils 12 aus in das Dämmstoffmaterial hineingeschraubt, und zwar soweit, bis die Bolzenaufnahme 5 nach oben weist, woraufhin der Befestigungsbolzen 11 durch die Bolzenaufnahme 5 und das Dämmstoffmaterial des Wickelwelleneinhausungsbauteils 12 getrieben und in eine nicht dargestellte, oberseitige Gebäudewand eingeschlagen worden ist.

Abwandlungen und Modifikationen der gezeigten Ausführungsformen sind möglich, ohne den Rahmen der durch die Ansprüche definierten Erfindung zu verlassen.

## Patentansprüche

1. Befestigungsanker (10) für ein Dämmstoffelement (12), insbesondere aus geschäumtem Kunststoff wie z.B. EPS, beispielsweise für ein eine Wickelwelleneinhausung (12) einer Gebäudeöffnungsverschattungsvorrichtung bildendes Dämmstoffelement (12), mit einem Ankerelement (10), das einen sich von seiner Spitze (2) zu seinem Kopf (4) erstreckenden Schaft (1) aufweist, wobei der Schaft (1) einen zumindest einmal vollständig umlaufenden Gewindegang (3) mit zur Verankerung in dem Dämmstoffelement ausreichender Gangtiefe trägt, und wobei sich eine Innenausnehmung (8, 8a) in Axialrichtung des Schafts (1) von einer kopfseitigen Stirnseite aus in das Ankerelement (10) hinein erstreckt,
**dadurch gekennzeichnet, dass**
das Ankerelement (10) eine sich durch eine die Innenausnehmung (8, 8a) umfangsseitig umgebende Wandung hindurch erstreckende Bolzenaufnahme (5) für einen Befestigungsbolzen (11) aufweist.

2. Befestigungsanker (10, 11) nach Anspruch 1, **dadurch gekennzeichnet, dass** der Befestigungsanker (10, 11) einen in die Bolzenaufnahme (5) passenden Befestigungsbolzen (11) aufweist.

3. Befestigungsanker (10, 11) nach Anspruch 1 oder 2, **dadurch gekennzeichnet, dass** das Ankerelement (10) einen insbesondere mehrfach gestuften Kopf (4) aufweist.

4. Befestigungsanker (10, 11) nach Anspruch 1, 2 oder 3, **dadurch gekennzeichnet, dass** die Innenausnehmung (8, 8a) im Bereich des Kopfs (4) einen sich ausgehend von der kopfseitigen Stirnseite insbesondere verjüngend in das Ankerelement (10) hinein erstreckenden Arbeitsabschnitt (8) aufweist, von dem aus die Bolzenaufnahme (5) die die Innenausnehmung (8, 8a) umfangsseitig umgebende Wandung durchdringt.

5. Befestigungsanker (10, 11) nach einem der vorhergehenden Ansprüche, **dadurch gekennzeichnet, dass** sich die Bolzenaufnahme (5) von der Innenausnehmung (8, 8a) aus mit einem Winkel gegenüber der Schaftachse zur Spitze (2) hin erstreckt, der kleiner als 90° ist, insbesondere zwischen 45° und 85° liegt, beispielsweise bei 75°.

6. Befestigungsanker (10, 11) nach einem der vorhergehenden Ansprüche, **dadurch gekennzeichnet, dass** die Innenausnehmung (8, 8a) im Bereich des Kopfs (4) den sich ausgehend von der kopfseitigen Stirnseite insbesondere verjüngend in das Ankerelement (10) hinein erstreckenden Arbeitsabschnitt (8) aufweist, wobei auf der der Bolzenaufnahme (5) gegenüberliegenden Seite des Arbeitsabschnitts (8) im Bereich der kopfseitigen Stirnseite ein Einschubkanal (6) für den Befestigungsbolzen (11) aus der den Arbeitsabschnitt (8) umgebenden Wandung ausgenommen ist.

7. Befestigungsanker (10, 11) nach einem der vorhergehenden Ansprüche 4 bis 6, **dadurch gekennzeichnet, dass** die Innenausnehmung (8, 8a) einen schaftseitig an den Arbeitsabschnitt (8) anschließenden Werkzeugeingriffsabschnitt (8a) mit einer zu einem Eindrehwerkzeug für das Ankerelement (10) passenden Kontur aufweist, insbesondere mit einer Kreuzschlitzkontur, wobei die Kontur des Werkzeugeingriffsabschnitts (8a) eine gegenüber dem Arbeitsabschnitt (8) insbesondere kleinere Radialabmessung aufweist.

8. Befestigungsanker (10, 11) nach einem der vorhergehenden Ansprüche, **dadurch gekennzeichnet, dass** die die Innenausnehmung (8, 8a) umfangsseitig umgebende Wandung im Bereich der Bolzenaufnahme (5) verstärkt ist, insbesondere mit einem sich nach innen hin in die Innenausnehmung (8, 8a) hinein erstreckenden Einsteckkanal (5a) für den Befestigungsbolzen (11).

9. Befestigungsanker (10, 11) nach einem der vorhergehenden Ansprüche, **dadurch gekennzeichnet, dass** an der kopfseitigen Stirnfläche des Ankerelements (10) eine Markierung (9) vorgesehen ist, die in Richtung der Bolzenaufnahme (5) zeigt.

10. Befestigungsanker (10, 11) nach einem der vorhergehenden Ansprüche, **dadurch gekennzeichnet, dass** die Bolzenaufnahme (5) von einer glatten Umfangsfläche eingefasst wird und der Befestigungsbolzen (11) als Einschlagbolzen mit Passung zur Bolzenaufnahme (5) ausgebildet ist.

11. Befestigungsanker nach einem der vorhergehenden Ansprüche, **dadurch gekennzeichnet, dass** die Bolzenaufnahme von einer mit einem Innengewinde versehenen Umfangsfläche eingefasst wird und der Befestigungsbolzen als Schraubbolzen mit einem zur Innengewinde der Bolzenaufnahme passenden Außengewinde ausgebildet ist.

12. Befestigungsanker nach einem der vorhergehenden Ansprüche, **dadurch gekennzeichnet, dass** der Gewindegang (3) mindestens 5 mm, bevorzugt mindestens 10 mm tief ist.

13. Befestigungsanker nach einem der vorhergehenden Ansprüche, **dadurch gekennzeichnet, dass** der Gewindegang (3) mindestens 5 mm, bevorzugt mindestens 10 mm breit ist.

14. Wickelwelleneinhausung einer Gebäudeöffnungsverschattungsvorrichtung, insbesondere Rollladenkasten, mit zumindest einem, bevorzugt mit einer Mehrzahl von Befestigungsankern (10,11) nach einem der vorhergehenden Ansprüche und mit einem bei eingebauter Wickelwelle die Wickelwelle zumindest oberseitig und auf der dem Gebäudeinneren zugewandten Innenseite, vorzugsweise auch auf der dem Gebäudeinneren abgewandten Außenseite umgebenden Dämmstoffelement (12), **dadurch gekennzeichnet, dass** die Wickelwelleneinhausung (12) mit dem zumindest einen, bevorzugt mit der Mehrzahl von Befestigungsankern (10, 11) nach einem der vorhergehenden Ansprüche an einer oberseitig an die Wickelwelleneinhausung (12) angrenzenden Gebäudewandung befestigt sein kann, wobei das Ankerelement (10) jeweils in eine vertikale Seitenwand des Dämmstoffelements (12) eingeschraubt ist und der Befestigungsbolzen (11) das Dämmstoffelement (12) jeweils vom Ankerelement (10) aus nach oben hin durchdringt oder durchdringen kann und in die oberseitig an die Wickelwelleneinhausung (12) angrenzende Gebäudewandung eingeschlagen oder eingeschraubt sein kann.

15. Wickelwelleneinhausung nach Anspruch 14, **dadurch gekennzeichnet, dass** die Wickelwelleneinhausung (12) außer mit dem zumindest einen Befestigungsanker (10, 11) mit weiteren Befestigungsmitteln gebäudeseitig befestigt sein kann.

## Claims

1. Fastening anchor (10) for an insulating element (12), in particular of foamed plastic such as e.g. EPS, for example for an insulating element (12) forming a winding shaft housing (12) of a building opening shading device, having an anchor element (10) which has a shank (1) extending from its tip (2) to its head (4), wherein the shank (1) bears a thread (3) which extends at least once completely around it and has a thread depth which is sufficient for anchoring in the insulating element, and wherein an inner recess (8, 8a) extends in the axial direction of the shank (1) from a head-side end face into the anchor element (10),
**characterized in that**
the anchor element (10) has a bolt receptacle (5) for a fastening bolt (11) extending through a wall circumferentially surrounding the inner recess (8, 8a).

2. Fastening anchor (10, 11) according to claim 1, **characterized in that** the fastening anchor (10, 11) has a fastening bolt (11) fitting into the bolt receptacle (5).

3. Fastening anchor (10, 11) according to claim 1 or 2, **characterized in that** the anchor element (10) has an in particular multi-stepped head (4), .

4. Fastening anchor (10, 11) according to claim 1, 2 or 3, **characterized in that** the inner recess (8, 8a) has, in the region of the head (4), a working section (8) which, starting from the head-side end face, extends in particular in a tapering manner into the anchor element (10) and from which the bolt receptacle (5) penetrates the wall circumferentially surrounding the inner recess (8, 8a).

5. Fastening anchor (10, 11) according to one of the preceding claims, **characterized in that** the bolt receptacle (5) extends from the inner recess (8, 8a) towards the tip (2) at an angle relative to the shank axis which is less than 90°, in particular between 45° and 85°, for example at 75°.

6. Fastening anchor (10, 11) according to one of the preceding claims, **characterized in that** the inner recess (8, 8a) in the region of the head (4) has the working section (8) extending from the head-side end face in particular in a tapering manner into the anchor element (10), wherein on the side of the working section (8) opposite the bolt receptacle (5), in the region of the head-side end face, an insertion channel (6) for the fastening bolt (11) is recessed from the wall surrounding the working section (8).

7. Fastening anchor (10, 11) according to one of the preceding claims 4 to 6, **characterized in that** the inner recess (8, 8a) has a tool engagement section (8a) adjoining the working section (8) on the shank side and having a contour matching a screwing-in tool for the anchor element (10), in particular having a cross-slot contour, wherein the contour of the tool engagement section (8a) has, in particular, a smaller radial dimension than the working section (8).

8. Fastening anchor (10, 11) according to one of the preceding claims, **characterized in that** the wall circumferentially surrounding the inner recess (8, 8a) is reinforced in the region of the bolt receptacle (5), in particular with an insertion channel (5a) for the fastening bolt (11) extending inwardly into the inner recess (8, 8a).

9. Fastening anchor (10, 11) according to one of the preceding claims, **characterized in that** a marking (9) is provided on the head-side end face of the anchor element (10), which marking (9) faces in the direction of the bolt receptacle (5).

10. Fastening anchor (10, 11) according to one of the preceding claims, **characterized in that** the bolt receptacle (5) is enclosed by a smooth circumferential surface and the fastening bolt (11) is designed as a drive-in bolt with a fit to the bolt receptacle (5).

11. Fastening anchor according to one of the preceding claims, **characterized in that** the bolt receptacle is enclosed by a circumferential surface provided with an internal thread and the fastening bolt is designed as a screw bolt with an external thread matching the internal thread of the bolt receptacle.

12. Fastening anchor according to one of the preceding claims, **characterized in that** the thread (3) is at least 5 mm, preferably at least 10 mm deep.

13. Fastening anchor according to one of the preceding claims, **characterized in that** the thread (3) is at least 5 mm, preferably at least 10 mm wide.

14. Winding shaft housing of a building opening shading device, in particular roller shutter box, having at least one fastening anchor (10, 11) according to one of the preceding claims, preferably a plurality thereof, and having an insulating element (12) which, when the winding shaft is installed, surrounds the winding shaft at least on the upper side and on the inner side facing the inside of the building, preferably also on the outer side facing away from the inside of the building, **characterized in that** the winding shaft housing (12) can be fastened with the at least one, preferably with the plurality of fastening anchors (10, 11) according to one of the preceding claims, to a building wall adjoining the winding shaft housing (12) on the upper side, wherein the anchor element (10) is in each case screwed into a vertical side wall of the insulating material element (12) and the fastening bolt (11) in each case penetrates or can penetrate the insulating material element (12) upwardly from the anchor element (10) and the building wall adjoining the winding shaft housing (12) on the upper side can be driven in or screwed in.

15. Winding shaft housing according to claim 14, **characterized in that** the winding shaft housing (12) can be fastened on the building side by further fastening means in addition to the at least one fastening anchor (10, 11).

## Revendications

1. Ancrage de fixation (10) pour un élément en matériau isolant (12), en particulier en matière plastique expansée comme par exemple en EPS, par exemple pour un élément en matériau isolant (12) formant une enceinte d'arbre d'enroulement (12) d'un dispositif d'ombrage d'ouverture de bâtiment, avec un élément d'ancrage (10) qui présente une tige (1) s'étendant de sa pointe (2) à sa tête (4), la tige (1) portant un pas de vis (3) faisant au moins une fois le tour complet avec une profondeur de pas suffisante pour l'ancrage dans l'élément en matériau isolant, et un évidement intérieur (8, 8a) s'étendant dans l'élément d'ancrage (10) dans la direction axiale de la tige (1) à partir d'une face frontale côté tête, **caractérisé en ce que**
l'élément d'ancrage (10) présente un logement de boulon (5) pour un boulon de fixation (11) s'étendant à travers une paroi entourant périphériquement l'évidement intérieur (8, 8a).

2. Ancrage de fixation (10, 11) selon la revendication 1, **caractérisé en ce que** l'ancrage de fixation (10, 11) présente un boulon de fixation (11) s'adaptant dans le logement de boulon (5).

3. Ancrage de fixation (10, 11) selon la revendication 1 ou 2, **caractérisé en ce que** l'élément d'ancrage (10) présente une tête (4) étagée, en particulier plusieurs fois.

4. Ancrage de fixation (10, 11) selon la revendication 1, 2 ou 3, **caractérisé en ce que** l'évidement intérieur (8, 8a) présente dans la zone de la tête (4) une partie de travail (8) s'étendant dans l'élément d'ancrage (10) en partant de la face frontale côté tête, en particulier en se rétrécissant, à partir de laquelle le logement de boulon (5) traverse la paroi entourant périphériquement l'évidement intérieur (8, 8a).

5. Ancrage de fixation (10, 11) selon l'une des revendications précédentes, **caractérisé en ce que** le logement de boulon (5) s'étend à partir de l'évidement intérieur (8, 8a) vers la pointe (2) avec un angle par rapport à l'axe de tige qui est inférieur à 90°, en particulier compris entre 45° et 85°, par exemple de 75°.

6. Ancrage de fixation (10, 11) selon l'une des revendications précédentes, **caractérisé en ce que** l'évidement intérieur (8, 8a) présente dans la zone de la tête (4) la partie de travail (8) s'étendant dans l'élément d'ancrage (10) en partant de la face frontale côté tête, en particulier en se rétrécissant, un canal d'insertion (6) pour le boulon de fixation (11) étant ménagé dans la paroi entourant la partie de travail (8) sur le côté de la partie de travail (8) opposé au logement de boulon (5), dans la zone de la face frontale côté tête.

7. Ancrage de fixation (10, 11) selon l'une des revendications précédentes 4 à 6, **caractérisé en ce que** l'évidement intérieur (8, 8a) présente une partie d'engagement d'outil (8a) se raccordant côté tige à la partie de travail (8) avec un contour adapté à un outil de vissage pour l'élément d'ancrage (10), en particulier avec un contour cruciforme, le contour de la partie d'engagement d'outil (8a) présentant une dimension radiale en particulier plus petite que la partie de travail (8).

8. Ancrage de fixation (10, 11) selon l'une des revendications précédentes, **caractérisé en ce que** la paroi entourant périphériquement l'évidement intérieur (8, 8a) est renforcée dans la zone du logement de boulon (5), en particulier avec un canal d'enfichage (5a) pour le boulon de fixation (11) s'étendant vers l'intérieur dans l'évidement intérieur (8, 8a).

9. Ancrage de fixation (10, 11) selon l'une des revendications précédentes, **caractérisé en ce qu'**un marquage (9) est prévu sur la face frontale côté tête de l'élément d'ancrage (10), lequel est orienté en direction du logement de boulon (5).

10. Ancrage de fixation (10, 11) selon l'une des revendications précédentes, **caractérisé en ce que** le logement de boulon (5) est entouré d'une surface périphérique lisse et **en ce que** le boulon de fixation (11) est réalisé sous la forme d'un boulon à frapper avec ajustement au logement de boulon (5).

11. Ancrage de fixation selon l'une des revendications précédentes, **caractérisé en ce que** le logement de boulon est entouré d'une surface périphérique pourvue d'un filetage intérieur et **en ce que** le boulon de fixation est réalisé sous la forme d'un boulon fileté avec un filetage extérieur adapté au filetage intérieur du logement de boulon.

12. Ancrage de fixation selon l'une des revendications précédentes, **caractérisé en ce que** le pas de vis (3) a une profondeur d'au moins 5 mm, de préférence d'au moins 10 mm.

13. Ancrage de fixation selon l'une des revendications précédentes, **caractérisé en ce que** le pas de vis (3) a une largeur d'au moins 5 mm, de préférence d'au moins 10 mm.

14. Enceinte d'arbre d'enroulement d'un dispositif d'ombrage d'ouverture de bâtiment, en particulier caisson de volet roulant, avec au moins un, de préférence avec une pluralité d'ancrages de fixation (10, 11) selon l'une des revendications précédentes et avec un élément en matériau isolant (12) entourant l'arbre d'enroulement au moins sur le côté supérieur et sur le côté intérieur tourné vers l'intérieur du bâtiment, de préférence également sur le côté extérieur opposé à l'intérieur du bâtiment, lorsque l'arbre d'enroulement est monté,
**caractérisée en ce que**
l'enceinte d'arbre d'enroulement (12) avec ledit au moins un, de préférence avec la pluralité d'ancrages de fixation (10, 11) selon l'une des revendications précédentes peut être fixée à une paroi de bâtiment adjacente du côté supérieur à l'enceinte d'arbre d'enroulement (12), l'élément d'ancrage (10) étant chaque fois vissé dans une paroi latérale verticale de l'élément en matériau isolant (12) et le boulon de fixation (11) traversant ou pouvant traverser chaque fois l'élément en matériau isolant (12) vers le haut à partir de l'élément d'ancrage (10) et pouvant être frappé ou vissé dans la paroi de bâtiment adjacente du côté supérieur à l'enceinte d'arbre d'enroulement (12).

15. Enceinte d'arbre d'enroulement selon la revendication 14, **caractérisée en ce que** l'enceinte d'arbre d'enroulement (12) peut être fixée côté bâtiment par d'autres moyens de fixation en plus dudit au moins un ancrage de fixation (10, 11).
